# EUROPÄISCHE PATENTSCHRIFT

(11) **EP 1 077 116 B1**
(45) Veröffentlichungstag und Bekanntmachung des Hinweises auf die Patenterteilung: **07.10.2009**
(21) Anmeldenummer: 00115260.2
(22) Anmeldetag: 14.07.2000
(51) Int. Cl.: B25F 5/00, B23D 79/06, B44D 3/16

(54) **Handwerkzeugmaschinensystem**
System for hand held machine-tool
Système d'outils à main motorisé

(30) Priorität: 16.08.1999 DE 19938162
(43) Veröffentlichungstag der Anmeldung: 21.02.2001
(73) Patentinhaber: ROBERT BOSCH GMBH, 70442 Stuttgart (DE)
(72) Erfinder: Stierle, Peter, 71111 Waldenbuch (DE); Renner, Monika, 70771 Leinfelden-Echterdingen (DE); Mueller, Joachim, 70597 Stuttgart (DE)
(74) Vertreter: Daub, Thomas

(56) Entgegenhaltungen:
- EP-A- 0 899 064
- US-A- 4 900 252

## Beschreibung

### Stand der Technik

Die Erfindung geht aus von einem Handwerkzeugmaschinensystem nach dem Oberbegriff des Anspruchs 1.

Handwerkzeugmaschinensysteme bestehen in der Regel aus verschiedenen Ausführungsformen von Handwerkzeugmaschinen, die sich hinsichtlich der Leistung, dem Gewicht, der Verarbeitung usw. unterscheiden können, jedoch die gleiche, grundlegende Funktion besitzen, wie beispielsweise Bohren, Schrauben, Schneiden, Fräsen, Schaben, Schleifen, Hobeln usw. Handwerkzeugmaschinen besitzen meist einen in einem Gehäuse gelagerten Motor, der über eine Antriebswelle direkt oder indirekt mit einem Mitnahmeelement verbunden ist, das in einem Aufnahmebereich für wenigstens ein Einsatzwerkzeug angeordnet ist und dieses wirkungsmäßig mit der Antriebswelle verbindet. Der Aufnahmebereich ist innerhalb eines Handwerkzeugmaschinensystems häufig sehr ähnlich ausgeführt, wodurch geeignete Bauteile und/oder geeignete und ausgereifte Konzepte in verschiedenen Handwerkzeugmaschinen verwendet und dadurch Kosten gespart werden können.

Des Weiteren ist aus der EP 0 899 064 A2 eine Handwerkzeugmaschine mit einer Maschinenplattform bekannt, die mit unterschiedlichen Werkzeugaufnahmen koppelbar ist.

Ferner ist aus der US 4,900,252 ein Handwerkzeugmaschinensystem mit einer Handwerkzeugmaschine bekannt, bei dem Einsatzwerkzeuge mit einer kodierten Aussenkontur versehen sind.

### Vorteile der Erfindung

Die Erfindung geht aus von einem Handwerkzeugmaschinensystem mit zumindest einer ersten und einer zweiten Ausführungsform einer Handwerkzeugmaschine, die einen in einem Gehäuse gelagerten Motor aufweist, der über eine Antriebswelle direkt oder indirekt mit einem Mitnahmeelement verbunden ist, das in einem Aufnahmebereich für wenigstens ein Einsatzwerkzeug angeordnet ist und dieses wirkungsmäßig mit der Antriebswelle verbindet, wobei zumindest eine Ausführungsform einen kodierten Aufnahmebereich und zumindest ein entsprechend kodiertes Einsatzwerkzeug aufweist.

Es wird vorgeschlagen, daß die Kodierung in ein das Einsatzwerkzeug führendes Lager eingebracht ist. Im Bereich der Lagerstelle kommen die Handwerkzeugmaschine und das Einsatzwerkzeug stets in Kontakt. Zusätzliche Kontaktstellen und Bauteile können vermieden und Kosten können eingespart werden. Es kann trotz eines grundlegend gleichen Aufbaus der Aufnahmebereiche der Ausführungsformen erreicht werden, daß keine oder nur bestimmte Einsatzwerkzeuge zwischen bestimmten Ausführungsformen ausgetauscht werden können. Es kann verhindert werden, daß ein für eine Ausführungsform ungeeignetes Einsatzwerkzeug verwendet wird und die Handwerkzeugmaschine und/oder das Einsatzwerkzeug beschädigt werden. Insbesondere kann erreicht werden, daß unkodierte Einsatzwerkzeuge einer leistungsschwachen Ausführungsform zwar in eine leistungsstarke Ausführungsform, jedoch kodierte Einsatzwerkzeuge der leistungsstarken Ausführungsform nicht in die leistungsschwache Ausführungsform eingeführt werden können, wodurch diese überlastet werden könnte.

Die Kodierung kann durch verschiedene, dem Fachmann als geeignet erscheinende Vorrichtungen mit verschiedenen Funktionsweisen erreicht werden, beispielsweise mit einer elektrischen, elektromagnetischen, und/oder optischen Funktionsweise usw. Besonders konstruktiv einfach und kostengünstig können jedoch mechanische Kodierungen realisiert werden, d.h. durch die Wahl entsprechender Abmessungen, wie Breite, Länge, Dicke usw., und insbesondere durch die Wahl entsprechender Konturen.

Handwerkzeugmaschinen besitzen häufig eine Abschlußkappe mit einer Aufnahmeöffnung für das Einsatzwerkzeug, beispielsweise eine Dichtkappe oder eine Schutzkappe, durch die das Einsatzwerkzeug beim Einführen in die Handwerkzeugmaschine zuerst geführt wird und die eine Schnittstelle zwischen einem Innenraum der Handwerkzeugmaschine und der Umgebung bildet. In einer Ausgestaltung der Erfindung wird vorgeschlagen, in die Kontur der Aufnahmeöffnung der Kappe die Kodierung einzubringen. Es kann besonders frühzeitig erkannt werden, ob ein ausgewähltes Einsatzwerkzeug für eine ausgewählte Handwerkzeugmaschine geeignet ist. Die kodierte Aufnahmeöffnung kann kostengünstig und konstruktiv einfach durch eine Platte mit einer kodierten Aufnahmeöffnung erreicht werden, die in der Kappe befestigt wird, beispielsweise eine Blechplatte oder eine Kunststoffplatte. Die restlichen Bauteile in den Aufnahmebereichen können identisch ausgeführt werden, wenn dies gewünscht ist. Ferner können einfach und kostengünstig verschiedene Handwerkzeugmaschinen mit verschiedenen Kodierungen ausgeführt und/oder die Kodierung einer Handwerkzeugmaschine kann gegebenenfalls schnell und kostengünstig verändert werden, indem die Kappe oder nur die Platte ausgetauscht wird.

Ist das Einsatzwerkzeug über ein Winkelgetriebe im Führungslager hin- und hergehend bewegbar und über zumindest einen Wälzkörper abstützbar, kann die Kodierung vorteilhaft in eine Kontur des Wälzkörpers eingebracht werden. Das Führungslager kann bis auf die Wälzkörper für verschiedene Ausführungsformen identisch ausgeführt werden. Verschiedene Handwerkzeugmaschinen können einfach und kostengünstig mit verschiedenen Kodierungen ausgeführt und/oder die Kodierung einer Handwerkzeugmaschine kann gegebenenfalls schnell und kostengünstig durch Auswechseln der Wälzkörper verändert werden. Wird das Einsatzwerkzeug auf verschiedenen Flächen über mehrere Wälzkörper abgestützt, können ferner durch die Kombination von verschieden Wälzkörpern verschiedene Kodierungen erreicht werden.

Die Wälzkörper können verschiedene, dem Fachmann als sinnvoll erscheinende Formen aufweisen, beispielsweise kugelförmig, kegelförmig, rollenförmig usw. Besonders vorteilhaft können jedoch Kodierungen in nadelförmige Wälzkörper eingebracht werden, über deren Länge einfach ein oder mehrere gleiche oder verschiedene Erhöhungen und/oder Vertiefungen angeformt werden können. Anstatt in Wälzkörpern kann ferner vorteilhaft in eine Gleitfläche des Lagers eine kodierte Kontur eingebracht werden, über die das Einsatzwerkzeug abstützbar ist.

Die Einsatzwerkzeuge können durch verschiedene, dem Fachmann als sinnvoll erscheinende Verfahren entsprechend kodiert werden, beispielsweise können besonders kostengünstig durch Prägen entsprechende Erhöhungen und/oder Vertiefungen angeformt werden.

### Zeichnung

Weitere Vorteile ergeben sich aus der folgenden Zeichnungsbeschreibund. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Beschreibung der Ausführungsbeispiele

Es zeigen:
- Fig. 1: einen Längsschnitt durch eine Handwerkzeugmaschine,
- Fig. 2: eine geöffnete Handwerkzeugmaschine nach Fig. 1 von unten,
- Fig. 3: einen vergrößerten Ausschnitt III aus Fig. 1 mit einem montierten Einsatzwerkzeug,
- Fig. 4: ein Führungslager schräg von oben,
- Fig. 5: ein kodiertes Einsatzwerkzeug von oben,
- Fig. 6: das Einsatzwerkzeug nach Fig. 5 von der Seite,

- Fig. 7: eine vergrößerte Darstellung eines Schnitts entlang der Linie VII-VII in Fig. 5,
- Fig. 8: eine vergrößerte Darstellung eines Schnitts entlang der Linie VIII-VIII in Fig. 5,
- Fig. 9: ein Mitnahmeelement mit einem Einsatzwerkzeug,
- Fig. 10: eine Variante nach Fig. 6,
- Fig. 11: eine vergrößerte Darstellung eines Schnitts entlang der Linie XI-XI in Fig. 10,
- Fig. 12: eine Variante nach Fig. 4 mit kodierten Gleitflächen,
- Fig. 13: eine vergrößerte Darstellung einer Aufnahmeöffnung einer Schutzkappe und
- Fig. 14: eine Variante nach Fig. 13.

### Beschreibung der Ausführungsbeispiele

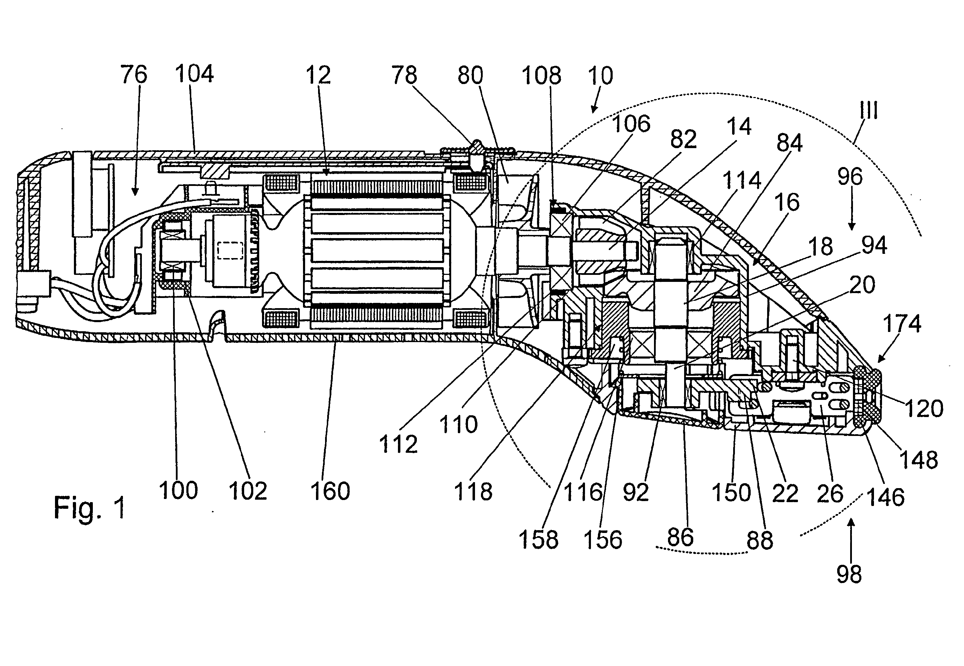

Fig. 1 zeigt einen Längsschnitt durch eine Handwerkzeugmaschine zur schabenden Bearbeitung von Oberflächen, kurz als Schaber bezeichnet. Die Handwerkzeugmaschine besitzt einen in einem Gehäuse 10 angeordneten Motor 12, der über Elektrokabel 76 elektrisch versorgt und über einen Schalter 78 ein- und ausschaltbar ist. Der Elektromotor 12 ist über eine Antriebswelle 14 mit einem Lüfterrad 80 und mit einem Winkelgetriebe 16 wirkungsmäßig verbunden, und zwar ist auf der Antriebswelle 14 ein Ritzel 82 befestigt, das mit einem von einer Abtriebswelle 18 getragenen Tellerrad 84 kämmt, dessen Drehachse rechtwinklig zur Antriebswelle 14 verläuft. Am nach unten weisenden Ende der Abtriebswelle 18 ist ein Exzenterzapfen 20 angeformt, der in ein pleuelartiges Mitnahmeelement 22 greift, das in einem Aufnahmebereich 174 für ein Einsatzwerkzeug 24 angeordnet ist (Fig. 1, 2 und 3).

Das Mitnahmeelement 22 stützt sich über eine von angeformten Auflagerippen 72, 74 gebildete Auflagefläche 70 auf dem Einsatzwerkzeug 24 ab und greift mit einem angeformten Bolzen 88 in ein Langloch 90 des Einsatzwerkzeugs 24. Der Exzenterzapfen 20 ist über ein Wälzlager 92 im Mitnahmeelement 22 gelagert. Durch das Langloch 90 erfolgt die Bewegungsübertragung von der Antriebswelle 14 über das Mitnahmeelement 22 auf das Einsatzwerkzeug 24 nur dann, wenn das Einsatzwerkzeug 24 auf eine Arbeitsfläche aufgesetzt und soweit zurück geschoben wird, daß sich der Bolzen 88 am Rand des Langlochs 90 abstützen und so seine hin- und hergehende Bewegung auf das Einsatzwerkzeug 24 übertragen kann. Im Leerlauf steht das Einsatzwerkzeug 24 bei drehender Antriebswelle 14 still, so daß der Verschleiß an den bewegungsübertragenden Teilen verringert wird. Verletzungen im Leerlauf durch ein sich bewegendes Einsatzwerkzeug 24 werden vermieden. Ferner kann das ruhende Einsatzwerkzeug 24 im Leerlauf gezielt an einer gewünschten Stelle auf der zu bearbeitenden Oberfläche aufgesetzt werden.

Das Winkelgetriebe 16 ist in einem separaten Getriebegehäuse 94 aus Aluminiumdruckguß angeordnet, das im vorderen, oberen Bereich 96 einen ersten Teil und mit einem Deckel 150 im vorderen, unteren Bereich 98 einen zweiten Teil des Gehäuses 10 bzw. Außenwände der Handwerkzeugmaschine bildet.

Im Getriebegehäuse 94 sind mehrere Lagerstellen integriert. Die Antriebswelle 14 des Elektromotors 12 ist an einem ersten, dem Einsatzwerkzeug 24 abgewandten Ende über ein Lager 100 und über ein Bauteil 102 in einer ersten oberen Kunststoffgehäuseschale 104 gelagert. Ein zweites, dem Einsatzwerkzeug 24 zugewandtes Ende der Antriebswelle 14 ist über ein Lager 106 in einer topfförmigen Ausnehmung 108 im Getriebegehäuse 94 gelagert. Das Lager 106 ist in radialer Richtung ca. über 1/3 seiner Länge über einen Schiebesitz 110 direkt im Getriebegehäuse 94 und über ca. 2/3 seiner Länge in radialer Richtung über einen Gummiring 112 im Getriebegehäuse 94 abgestützt. In axialer Richtung ist das Lager 106 über eine nicht näher dargestellte Halterippe in der topfförmigen Ausnehmung 108 fixiert, die an einen Schraubendom der oberen Gehäuseschale 104 angeformt ist und sich bei der Montage vor die topfförmige Ausnehmung 108 schiebt.

Ferner ist die Abtriebswelle 18 an ihrem oberen, dem Einsatzwerkzeug 24 abgewandten Ende mit einem ersten Lager 114 direkt und an ihrem zweiten, dem Einsatzwerkzeug 24 zugewandten Ende mit einem zweiten Lager 116 über eine als Stellmittel 118 ausgebildete Lagerbuchse im Getriebegehäuse 94 gelagert.

Zum Auswechseln des Einsatzwerkzeugs 24 kann das Mitnahmeelement 22 über die Drucktaste 86 entlang des Exzenterzapfens 20 entgegen einer Druckfeder 156 verschoben werden, die sich in einer Einbuchtung 158 am Stellmittel 118 abstützt. Der Bolzen 88 verschiebt sich aus dem Langloch 90 des Einsatzwerkzeugs 24, wodurch dieses ohne Werkzeuge entfernt und ein alternatives Einsatzwerkzeug eingesetzt werden kann.

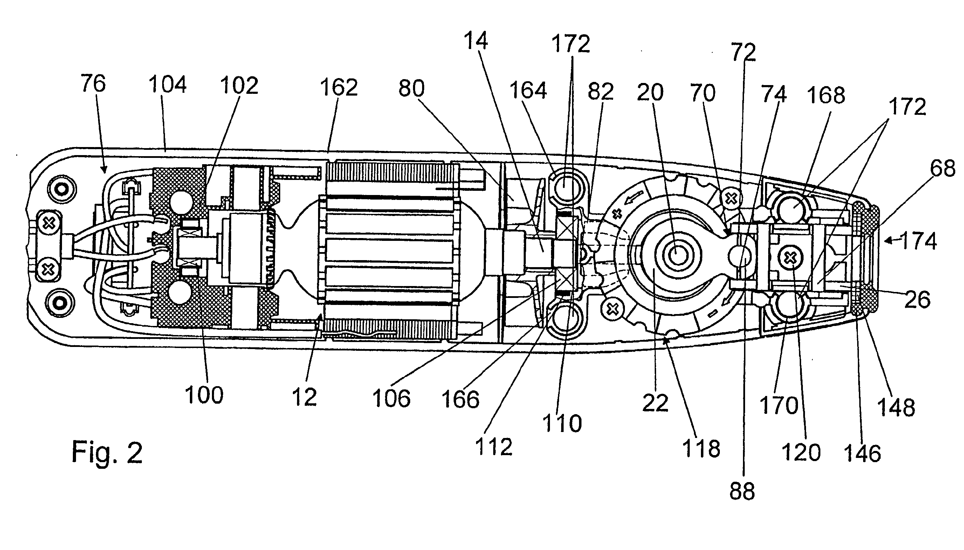

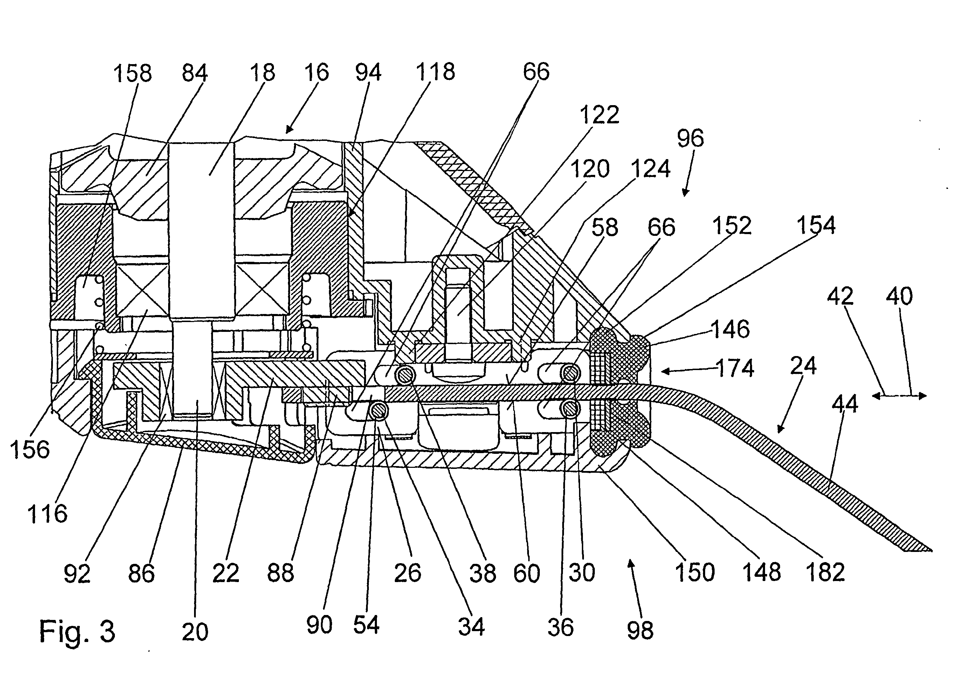

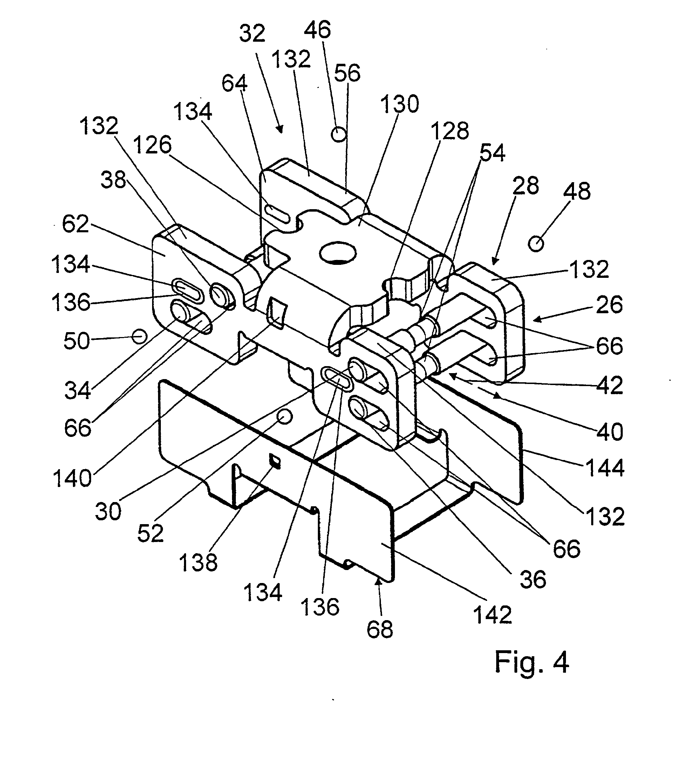

Am Getriebegehäuse 94 ist zudem ein Führungslager 26 mit einem U-förmigen Käfig 56 für das Einsatzwerkzeug 24 befestigt, und zwar über eine Schraube 120 und über an das Getriebegehäuse 94 angeformte Zapfen 122, 124, die in Ausnehmungen 126, 128 einer Deckseite 130 des U-förmigen Käfigs 56 formschlüssig greifen (Fig. 3 und 4). Das in einem Stanz-Biegeverfahren aus einem gehärteten Stahlblech hergestellte Führungslager 26 stützt sich mit Stirnseiten 132 seiner Schenkel 62, 64 am Getriebegehäuse 94 ab. Das Führungslager 26 ist sicher form- und kraftschlüssig mit dem Getriebegehäuse 94 verbunden und eine Nachbearbeitung der Lagerflächen bzw. Stirnseiten 132 des Führungslagers 26 nach dem Stanz-Biegeverfahren kann vermieden werden. Zwischen den Schenkeln 62, 64 des U-förmigen Käfigs 56 ist zudem das Mitnahmeelement 22 verdrehsicher geführt (Fig. 2).

Das Führungslager 26 besitzt im vorderen, oberen Bereich 28, in einer ersten Lagerachse oberhalb dem Einsatzwerkzeug 24 einen ersten Wälzkörper 30 und in einem hinteren Bereich 32, in einer zweiten Lagerachse unterhalb dem Einsatzwerkzeug 24 einen zweiten Wälzkörper 34. Ferner besitzt das Führungslager in einer dritten Lagerachse einen dritten Wälzkörper 36, der vor dem zweiten Wälzkörper 34, unterhalb dem Einsatzwerkzeug 24 angeordnet ist und in einer vierten Lagerachse einen vierten Wälzkörper 38, der hinter dem dritten Wälzkörper 36, oberhalb dem Einsatzwerkzeug 24 angeordnet ist. Das Einsatzwerkzeug 24 ist auf seiner Oberseite 58 und auf seiner Unterseite 60 über jeweils zwei Wälzkörper 30, 34, 36, 38 abstützbar, die als Nadeln ausgebildet und in Langlöchern 66 in den Schenkeln 62, 64 des U-förmigen Käfigs 56 geführt sind.

Ferner sind im Führungslager 26 gegenüber jeder Seitenfläche 44 des Einsatzwerkzeugs 24 jeweils zwei Wälzkörper 46, 48, 50, 52 in zwei Lagerachsen angeordnet, über die das Einsatzwerkzeug 24 senkrecht zu seiner Bewegungsrichtung 40, 42 über seine Seitenflächen 44 abstützbar ist (Fig. 3 und 4). Das Einsatzwerkzeug 24 ist im Führungslager 26 vollständig über die Wälzkörper 30, 34, 36, 38, 46, 48, 50, 52 abstützbar. Eine Gleitreibung zwischen dem Führungslager 26 und dem Einsatzwerkzeug 24 wird vermieden.

Die als Kugeln ausgebildeten Wälzkörper 46, 48, 50, 52 sind in konischen Langlöchern 134 geführt. Bereits vor der Montage des Führungslagers 26 im Gehäuse 10 bzw. am Getriebegehäuse 94 sind die Kugeln zur Innenseite über die Konuse 136 und zur Außenseite über ein Halteblech 68 verliersicher im Käfig 56 gehalten. Im montierten Zustand des Führungslagers 26 am Getriebegehäuse 94 sind die Kugeln zur Außenseite zusätzlich durch nicht näher dargestellte Seitenwände des Getriebegehäuses 94 gesichert, die auf Seitenflächen 142, 144 des Halteblechs 68 aufliegen. Das Halteblech 68 wird über jeweils einen Vorsprung 138 auf jeder Seite in Ausnehmungen 140 am Käfig 56 eingerastet und sichert neben den Kugeln die als Nadeln ausgebildeten Wälzkörper 30, 34, 36, 38 verliersicher im Käfig 56 bereits vor der Montage am Getriebegehäuse 94.

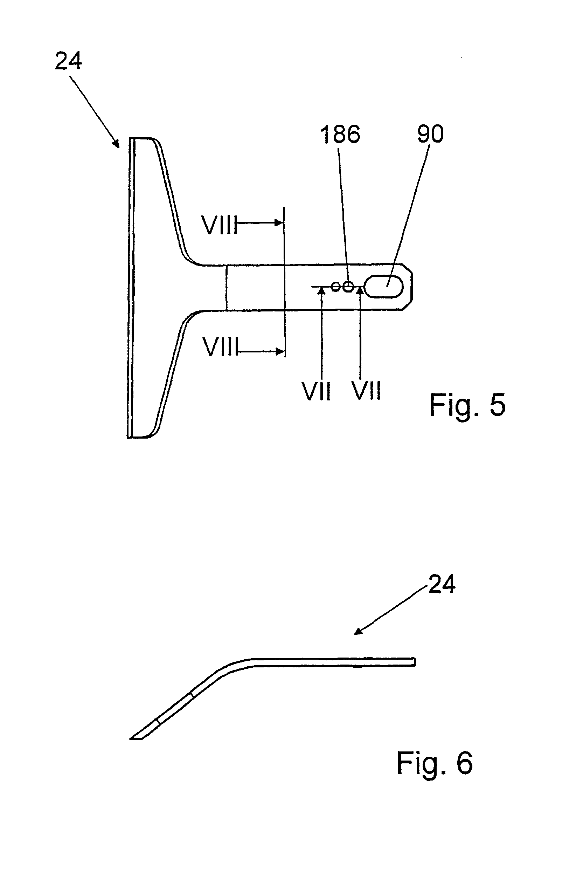

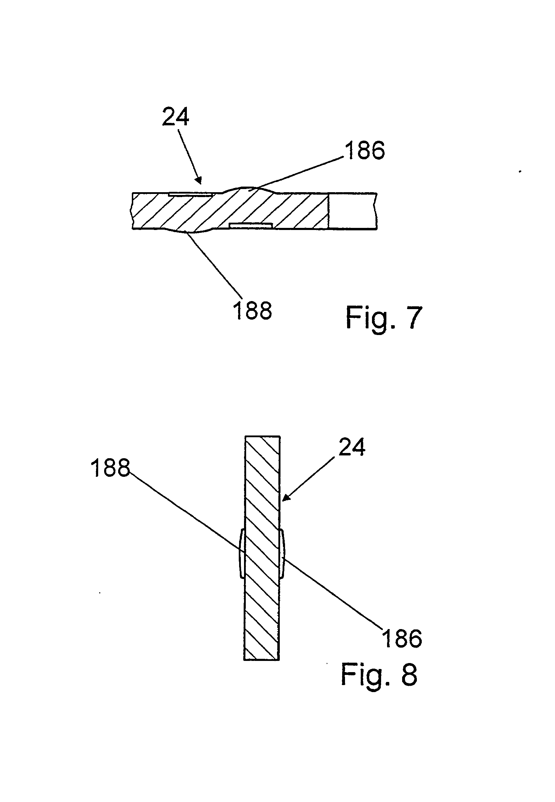

In die Konturen der nadelförmigen Wälzkörper 30, 34, 36, 38 sind Kodierungen 54 eingebracht, und zwar jeweils in der Form eines Einstichs. Das Einsatzwerkzeug 24 besitzt eine entsprechend kodierte Außenkontur mit Erhöhungen 186, 188, die durch prägen an die Oberseite 58 und an die Unterseite 60 des Einsatzwerkzeugs 24 angeformt sind (Fig. 5 bis 8). Die Einsatzwerkzeuge 24 mit den Erhöhungen 186, 188 oder auch Einsatzwerkzeuge ohne Erhöhungen können in das Führungslager 26 eingeschoben werden. Die Einsatzwerkzeuge 24 mit den Erhöhungen 186, 188 können jedoch nicht in unkodierte Führungslager eingeschoben werden, und zwar insbesondere nicht in ein unkodiertes Führungslager einer leistungsschwächeren Ausführungsform der Handwerkzeugmaschine.

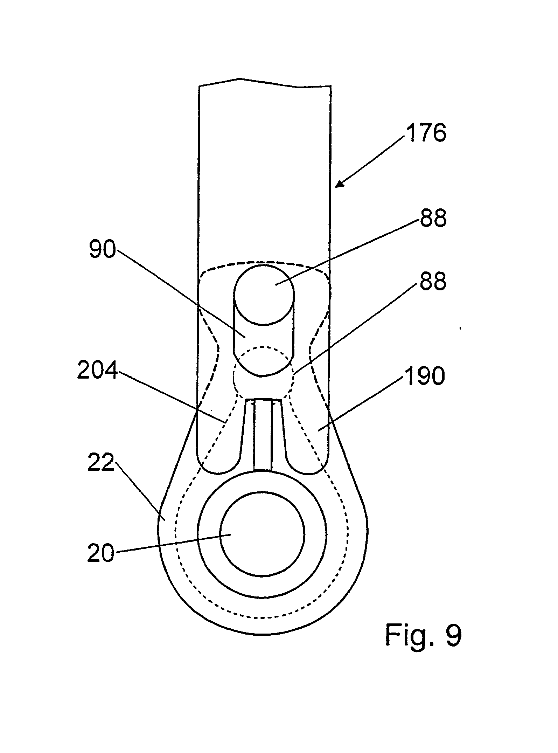

In den Fig. 9 bis 11 sind alternative Einsatzwerkzeuge 176, 178 dargestellt. Im wesentlichen gleichbleibende Bauteile sind in den Ausführungsbeispielen grundsätzlich mit den gleichen Bezugszeichen beziffert. Das Einsatzwerkzeug 176 besitzt zum Mitnahmeelement 22 eine axiale Erstreckung 190 und kann dadurch mit einem kürzer ausgeführten Mitnahmeelement 204 einer schwächeren Ausführungsform nicht verbunden werden, und zwar stößt die axiale Erstreckung 190 gegen den Exzenterzapfen 20 bevor der Bolzen 88 in das Langloch 90 eingeführt werden kann.

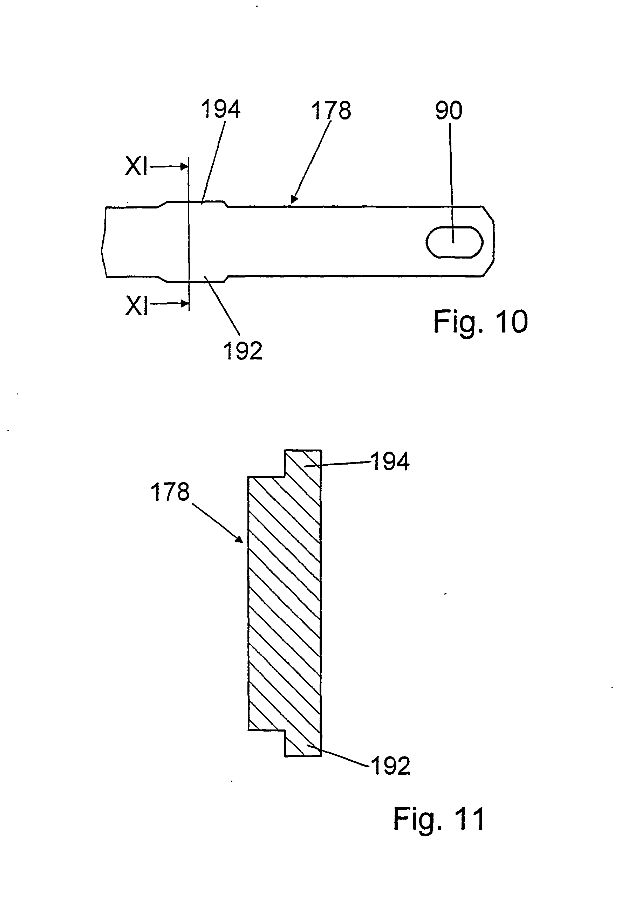

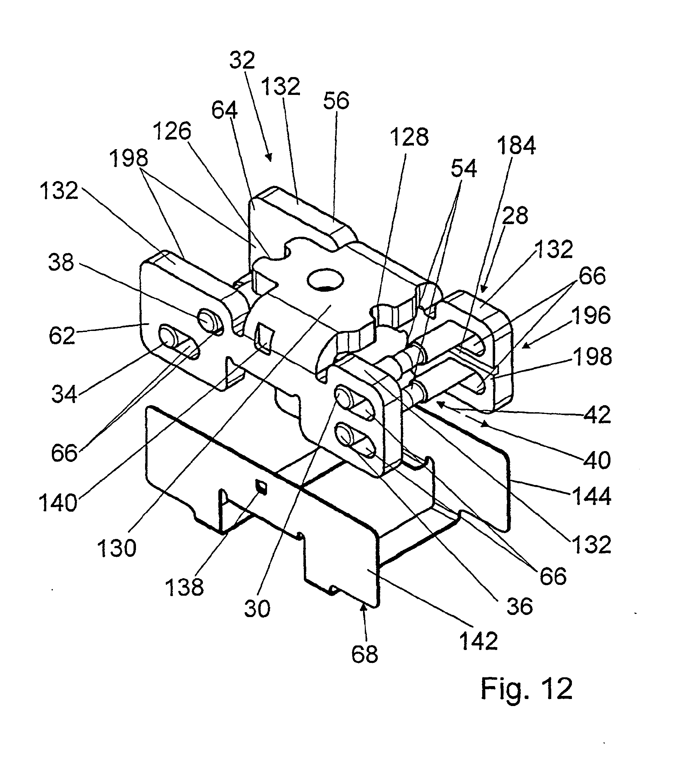

Das Einsatzwerkzeug 178 besitzt seitlich an seinem Schaft angeformte Erstreckungen 192, 194, und zwar nur in halber Schaftdicke (Fig. 10 und 11). Das Einsatzwerkzeug 178 kann in Führungslager 196 eingeführt werden, die das Einsatzwerkzeug 178 seitlich über Gleitflächen 198 mit einer entsprechenden Kodierung 184 bzw. Nut führen (Fig. 12). In Führungslagern, die unkodierte Einsatzwerkzeuge seitlich über Gleitflächen führen, können kostengünstig und einfach entsprechende Kodierungen 184 bzw. Nuten eingebracht werden. Das kodierte Einsatzwerkzeug 178 kann auf den durch die Nuten nur geringfügig verkleinerten Gleitflächen 198 gut geführt werden. In das Führungslager 196 können zwar unkodierte Einsatzwerkzeug eingeführt werden, jedoch können kodierte Einsatzwerkzeuge 178 nicht in unkodierte Führungslager eingeführt werden, und zwar insbesondere in ein unkodiertes Führungslager einer leistungsschwächeren Ausführungsform.

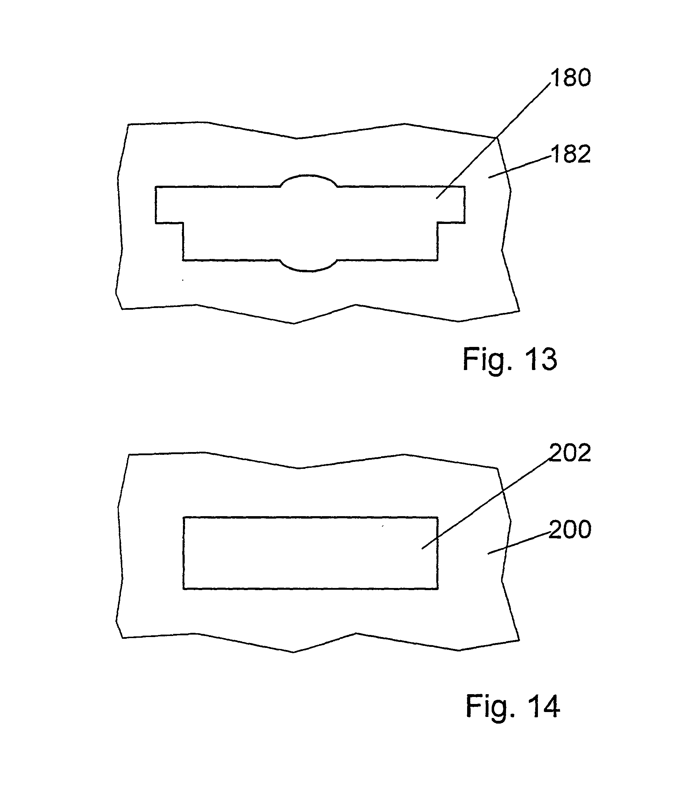

Im vorderen Bereich ist die Handwerkzeugmaschine über eine Schutzkappe 146 mit einer Filzdichtung 148 abgedichtet (Fig. 3), die zwischen dem Getriebegehäuse 94 und dem Deckel 150 formschlüssig eingelegt ist, und zwar greifen das Getriebegehäuse 94 und der Deckel 150 zwischen zwei umlaufende Wülste 152, 154 der Schutzkappe 146. Die Schutzkappe 146 ist dadurch besonders einfach zu montieren und besonders abreißsicher mit der Handwerkzeugmaschine verbunden. In der Schutzkappe 146 ist eine Blechplatte 182 befestigt, die eine kodierte Aufnahmeöffnung 180 aufweist, durch die das Einsatzwerkzeug 24 nach außen ragt (Fig. 3 und 13). Durch die Aufnahmeöffnung 180 können entsprechend kodierte und unkodierte Einsatzwerkzeuge 24, 176, 178 in die Handwerkzeugmaschine eingeführt werden. Fig. 14 zeigt eine alternative Blechplatte 200 mit einer Aufnahmeöffnung 202, durch die nur unkodierte Einsatzwerkzeuge eingeführt werden können.

Das Gehäuse 10 besitzt neben der ersten oberen Gehäuseschale 104 eine zweite untere Kunststoffgehäuseschale 160, die in einer waagerechten Arbeitsstellung in einer waagerechten Teilungsebene 162 zusammengefügt sind (Fig. 2). An das Getriebegehäuse 94 sind vier Hülsen 164, 166, 168, 170 angeformt, in die von oben vier Zapfen 172 der oberen Gehäuseschale 104 kraft- und formschlüssig eingesteckt sind. Ferner werden von unten in die zwei vom Einsatzwerkzeug 24 abgewandten Hülsen 164, 166 zwei nicht näher dargestellte Zapfen von der unteren Gehäuseschale 160 und in die zwei, dem Einsatzwerkzeug 24 zugewandten Hülsen 168, 170 zwei Zapfen des Deckels 150 form- und kraftschlüssig eingesteckt. Die Zapfen 172 der Gehäuseschalen 104, 160 und die Zapfen des Deckels 150 werden von Schraubendomen gebildet, über die die Gehäuseschalen 104, 160, der Deckel 150 und das Getriebegehäuse 94 über nicht näher dargestellte Schrauben miteinander verschraubt sind.

### Bezugszeichen

- 10: Gehäuse
- 12: Motor
- 14: Antriebswelle
- 16: Winkelgetriebe
- 18: Abtriebswelle
- 20: Exzenter
- 22: Mitnahmeelement
- 24: Einsatzwerkzeug
- 26: Führungslager
- 28: Bereich
- 30: Wälzkörper
- 32: Bereich
- 34: Wälzkörper
- 36: Wälzkörper
- 38: Wälzkörper
- 40: Bewegungsrichtung
- 42: Bewegungsrichtung
- 44: Seitenfläche
- 46: Wälzkörper
- 48: Wälzkörper
- 50: Wälzkörper
- 52: Wälzkörper
- 54: Kodierung
- 56: Käfig
- 58: Oberseite
- 60: Unterseite
- 62: Schenkel
- 64: Schenkel
- 66: Langloch
- 68: Bauteil
- 70: Auflagefläche
- 72: Auflagerippen
- 74: Auflagerippen
- 76: Elektrokabel
- 78: Schalter
- 80: Lüfterrad
- 82: Ritzel
- 84: Tellerrad
- 86: Drucktaste
- 88: Bolzen
- 90: Langloch
- 92: Wälzlager
- 94: Getriebegehäuse
- 96: Bereich

- 98: Bereich
- 100: Lager
- 102: Bauteil
- 104: Gehäuseschale
- 106: Lager
- 108: Ausnehmung
- 110: Schiebesitz
- 112: Gummiring
- 114: Lager
- 116: Lager
- 118: Stellmittel
- 120: Schraube
- 122: Zapfen
- 124: Zapfen
- 126: Ausnehmung
- 128: Ausnehmung
- 130: Deckseite
- 132: Stirnseite
- 134: Langloch
- 136: Konus
- 138: Vorsprung
- 140: Ausnehmung
- 142: Seitenfläche
- 144: Seitenfläche
- 146: Schutzkappe
- 148: Filzdichtung
- 150: Deckel
- 152: Wulst
- 154: Wulst
- 156: Druckfeder

- 158: Einbuchtung
- 160: Gehäuseschale
- 162: Teilungsebene
- 164: Hülse
- 166: Hülse
- 168: Hülse
- 170: Hülse
- 172: Zapfen
- 174: Aufnahmebereich
- 176: Einsatzwerkzeug
- 178: Einsatzwerkzeug
- 180: Aufnahmeöffnung
- 182: Platte
- 184: Kodierung
- 186: Erhöhung
- 188: Erhöhung
- 190: Erstreckung
- 192: Erstreckung
- 194: Erstreckung
- 196: Lager
- 198: Gleitfläche
- 200: Platte
- 202: Aufnahmeöffnung
- 204: Mitnahmeelement

## Patentansprüche

1. Handwerkzeugmaschinensystem mit zumindest einer ersten und einer zweiten Ausführungsform einer Handwerkzeugmaschine, die einen in einem Gehäuse (10) gelagerten Motor (12) aufweist, der über eine Antriebswelle (14) direkt oder indirekt mit einem Mitnahmeelement (22) verbunden ist, das in einem Aufnahmebereich (174) für wenigstens ein Einsatzwerkzeug (24, 176, 178) angeordnet ist und dieses wirkungsmäßig mit der Antriebswelle (14) verbindet, wobei zumindest eine Ausführungsform einen kodierten Aufnahmebereich (174) und zumindest ein entsprechend kodiertes Einsatzwerkzeug (24, 176) aufweist, **dadurch gekennzeichnet, daß** die Kodierung (54, 184) in ein das Einsatzwerkzeug (24, 176, 178) führendes Lager (26, 196) eingebracht ist.

2. Handwerkzeugmaschinensystem nach Anspruch 1, **dadurch gekennzeichnet, daß** zumindest eine Ausführungsform eine nach außen abschließende Kappe (146) aufweist, die eine Aufnahmeöffnung (180) mit einer kodierten Kontur für das Einsatzwerkzeug (24, 176) besitzt.

3. Handwerkzeugmaschinensystem nach Anspruch 2, **dadurch gekennzeichnet, daß** die kodierte Aufnahmeöffnung (180) in einer in der Kappe (146) befestigten Platte (182) eingebracht ist.

4. Handwerkzeugmaschinensystem nach Anspruch 1, **dadurch gekennzeichnet, daß** das Einsatzwerkzeug (24, 176, 178) über ein Winkelgetriebe (16) im Lager (26) hin- und hergehend bewegbar und über zumindest einen Wälzkörper (30, 34, 36, 38) abstützbar ist, in dessen Kontur eine Kodierung (54) eingebracht ist.

5. Handwerkzeugmaschinensystem nach Anspruch 4, **dadurch gekennzeichnet, daß** die Kodierung (54) in zumindest einen als Nadel ausgebildeten Wälzkörper (30, 34, 36, 38) eingebracht ist.

6. Handwerkzeugmaschinensystem nach einem der Ansprüche 1, 4 und 5, **dadurch gekennzeichnet, daß** eine Kodierung (184) in zumindest eine Gleitfläche (198) des Lagers (196) eingebracht ist, über die das Einsatzwerkzeug (178) abstützbar ist.

7. Handwerkzeugmaschinensystem nach einem der vorhergehenden Ansprüche, **dadurch gekennzeichnet, daß** an das Einsatzwerkzeug (24) durch prägen eine kodierte Außenkontur angeformt ist.

8. Handwerkzeugmaschinensystem nach Anspruch 7, **gekennzeichnet dadurch, dass** das Einsatzwerkzeug einen Schaft aufweist an dem die kodierte Außenkontur angeordnet ist.

9. Handwerkzeugmaschinensystem nach Anspruch 8, **gekennzeichnet durch** seitlich an den Schaft angeformte Erstreckungen (192, 194) wobei die Erstreckungen (192, 194) eine halbe Schaftdicke aufweisen.

## Claims

1. Portable power tool system having at least a first and a second embodiment of a portable power tool which has a motor (12) which is mounted in a housing (10) and is connected via a drive shaft (14) directly or indirectly to a driving element (22) which is arranged in a locating region (174) for at least one application tool (24, 176, 178) and operatively connects the latter to the drive shaft (14), wherein at least one embodiment has a coded locating region (174) and at least one correspondingly coded application tool (24, 176), **characterized in that** the coding (54, 184) is incorporated in a bearing (26, 196) guiding the application tool (24, 176, 178).

2. Portable power tool system according to Claim 1, **characterized in that** at least one embodiment has an end cap (146) on the outside which has a locating opening (180) having a coded contour for the application tool (24, 176).

3. Portable power tool system according to Claim 2, **characterized in that** the coded locating opening (180) is incorporated in a plate (182) fastened in the cap (146).

4. Portable power tool system according to Claim 1, **characterized in that** the application tool (24, 176, 178) can be moved in as reciprocating manner in the bearing (26) via an angular gearing (16) and can be supported via at least one rolling element (30, 34, 36, 38), in the contour of which a coding (54) is incorporated.

5. Portable power tool system according to Claim 4, **characterize in that** the coding (54) is incorporated in at least one rolling element (30, 34, 36, 38) designed as a needle.

6. Portable power tool system according to one of Claims 1, 4 and 5, **characterized in that** a coding (184) is incorporated in at least one sliding surface (198) of the bearing (196), via which sliding surface (198) the application tool (178) can be supported.

7. Portable power tool system according to one of the preceding claims, **characterized in that** a coded outer contour is arranged on the application tool (24) by embossing.

8. Portable power tool system according to Claim 7, **characterized in that** the application tool has a shank on which the coded outer contour is arranged.

9. Portable power tool system according to Claim 8 **characterized by** extensions (192, 194) which are arranged laterally on the shank, wherein the extensions (192, 194) have half the depth of the shank.

## Revendications

1. Système d'outil à main motorisé avec au moins une première et une deuxième formes de réalisation d'un outil à main motorisé, qui comporte un moteur (12), logé dans un boîtier (10), qui est relié directement ou indirectement par un arbre de commande (14) à un élément d'entraînement (22), qui est disposé dans une zone de réception (174) pour au moins un outil rapporté (24, 176, 178) et relie celui-ci activement à l'arbre de commande (14), dans lequel au moins une forme de réalisation présente une zone de réception codée (174) et au moins un outil rapporté (24, 176) codé de manière correspondante, **caractérisé en ce que** le codage (54, 184) est réalisé dans un palier (26, 196) guidant l'outil rapporté (24, 176, 178).

2. Système d'outil à main motorisé selon la revendication 1, **caractérisé en ce qu'**au moins une forme de réalisation présente un couvercle (146) de fermeture vers l'extérieur, qui comporte une ouverture de réception (180) avec un contour codé pour l'outil rapporté (24, 176).

3. Système d'outil à main motorisé selon la revendication 2, **caractérisé en ce que** l'ouverture de réception codée (180) est pratiquée dans une plaque (182) fixée dans le couvercle (146).

4. Système d'outil à main motorisé selon la revendication 1, **caractérisé en ce que** l'outil rapporté (24, 176, 178) est mobile en va-et-vient dans le palier (26) an moyen d'un engrenage conique (16) et peut être appuyé au moyen d'au moins un corps de roulement (30, 34, 36, 38) dont le contour porte un codage (54).

5. Système d'outil à main motorisé selon la revendication 4, **caractérisé en ce que** le codage (54) est réalisé dans au moins un corps de roulement (30, 34, 36, 38) se présentant sous la forme d'une aiguille.

6. Système d'outil à main motorisé selon l'une quelconque des revendications 1, 4 et 5, **caractérisé en ce qu'**un codage (184) est pratiqué dans au moins une face de glissement (198) du palier (196), au moyen de laquelle l'outil rapporté (178) peut être appuyé.

7. Système d'outil à main motorisé selon l'une quelconque des revendications précédentes, **caractérisé en ce qu'**un contour extérieur codé est façonné sur l'outil rapporté (24) par estampage.

8. Système d'outil à main motorisé selon la revendication 7, **caractérisé en ce que** l'outil rapporté présente une queue, sur laquelle le contour extérieur codé est disposé.

9. Système d'outil à main motorisé selon la revendication 8, **caractérisé par** des extensions (192, 194) formées latéralement sur la queue, dans lequel les extensions (192, 194) présentent la moitié de l'épaisseur de la queue.
